Europäisches Patentamt

European Patent Office

Office européen des brevets

(19)

(11) Publication number: **0 426 135 A2**

# EUROPEAN PATENT APPLICATION

(12)

(21) Application number: 90120839.7

(22) Date of filing: 30.10.90

(51) Int. Cl.5: **G06F 3/06**

(30) Priority: 31.10.89 JP 281735/89

(43) Date of publication of application:
08.05.91 Bulletin 91/19

(84) Designated Contracting States:
**DE FR GB**

(71) Applicant: **Kabushiki Kaisha Toshiba**
**72, Horikawa-cho Saiwai-ku**
**Kawasaki-shi(JP)**

(72) Inventor: **Nakamura, Nobutaka, c/o Intell.**
**Property Div.**
**Kabushiki Kaisha Toshiba, 1-1 Shibaura**
**1-chome**
**Minato-ku, Tokyo 105(JP)**

(74) Representative: **Henkel, Feiler, Hänzel &**
**Partner**
**Möhlstrasse 37**
**W-8000 München 80(DE)**

(54) Computer system with function of discriminating storage device.

(57) In a computer system with a function of dis-
criminating an FDD (13) used as an external storage
device, a counter (21) for counting step pulses (SP)
is used to set a flip-flop (22) in an ID response state,
thereby maintaining an identification mode different
from a normal read/write mode. In this identification
mode, ID data is preset in a shift register (20) by an
output signal (TC) from the counter (21). The shift
register (20) outputs ID data in synchronism with the
step pulse (SP). The ID data from the shift register
(20) is transferred to an FDC (14) trough an interface
signal line of the FDD (13) by a NAND gate (26)
gate-controlled in accordance with an output from
the flip-flop (22). The CPU (10) identifies the speci-
fication of the FDD (13) connected to the system in
accordance with the ID data transferred via the FDC
(14).

F I G. 3

EP 0 426 135 A2

## COMPUTER SYSTEM WITH FUNCTION OF DISCRIMINATING STORAGE DEVICE

The present invention relates to a floppy disk drive of devices used as external storage devices in a computer system and, more particularly, to a system with a function of discriminating a storage device, for discriminating a specification of a floppy disk drive connected to the system.

A floppy disk drive (FDD) is used as an external storage device in conventional computer systems such as personal computers, and a plurality of types of FDDs having different specifications have been developed. This specification includes items of a physical size (8, 5.25, and 3.5 inches), a recording density, a track density (track number), and the like of a disk as a recording medium.

Although an exclusive interface for an FDD is required to connect the FDD to a computer system, a standard interface which can be connected to a plurality of types of FDDs is normally used. This interface is called a floppy disk controller (FDC) and developed as an LSI circuit.

In a computer system, a central processing unit (CPU) executes processing for discriminating the presence/absence and type of FDD connected to the system upon initialization because the CPU must change control contents for an FDD in accordance with a specification of the FDD. That is, since parameters such as a data transfer rate with respect to an FDD, a step rate (a moving time per track of a head upon seeking), a maximum track number, and a maximum sector number change in accordance with a specification of the FDD, a CPU must execute control in accordance with the parameters.

As a method of discriminating the type of FDD, a method is available in which a head is actually caused to perform seeking and a track number (cylinder number) as one item of a specification of an FDD is discriminated by the number of step pulses generated by the seeking operation on the basis of the position of a track 0. In this case, the step pulse is a pulse for driving a stepping motor as a drive source for a carriage mounting a head. A head normally moves by one track by one step pulse. The track number of an FDD connected to a system can be discriminated by this method. In this method, however, only FDDs having different track numbers can be discriminated. That is, FDDs having the same track number but different recording densities cannot be discriminated.

In the conventional discriminating method, therefore, FDDs can be discriminated in accordance with only a limited specification such as a track number. For this reason, if an advanced FDD which is identical in track number but different in other specifications with respect to other FDDs is connected to a system, a CPU of the system cannot discriminate the FDD.

It is an object of the present invention to provide a computer system which can automatically discriminate external storage devices such as FDDs connected to the system and having different specifications in accordance with not a limited specification item such as a track number but an other items characterizing the storage devices, such as recording density, size, the provision or non-provision of a reject mechanism.

The present invention is a computer system with a function of discriminating a storage device, comprising: an interface unit, constituting an interface between a central processing unit of the system and the storage device and connected to the storage device through a plurality of interface signal lines, for exchanging various types of signals with the storage device; an identification circuit unit provided in the storage device and having a register unit for storing identification data set in accordance with a specification of the storage device, and a signal transfer unit for transferring the identification data output from the register unit to the interface unit through a predetermined signal line of the plurality of interface signal lines; and a control unit for identifying, in an identification mode, the specification of the storage device connected to the system on the basis of the identification data transferred from the identification circuit unit through the interface unit and executing drive control of the storage device.

This invention can be more fully understood from the following detailed description when taken in conjunction with the accompanying drawings, in which:

Fig. 1 is a block diagram showing a computer system according to an embodiment of the present invention;

Fig. 2 is a block diagram showing an external storage device according to the embodiment shown in Fig. 1;

Fig. 3 is a block diagram showing an ID circuit according to the embodiment shown in Fig. 1;

Fig. 4 is a view for explaining a disk used in an FDD of the embodiment shown in Fig. 1;

Fig. 5 is a view for explaining a head used in the FDD of the embodiment shown in Fig. 1; and

Figs. 6 to 8 are flow charts for explaining operations of the embodiment shown in Fig. 1.

A preferred embodiment of the present invention will be described below with reference to the accompanying drawings.

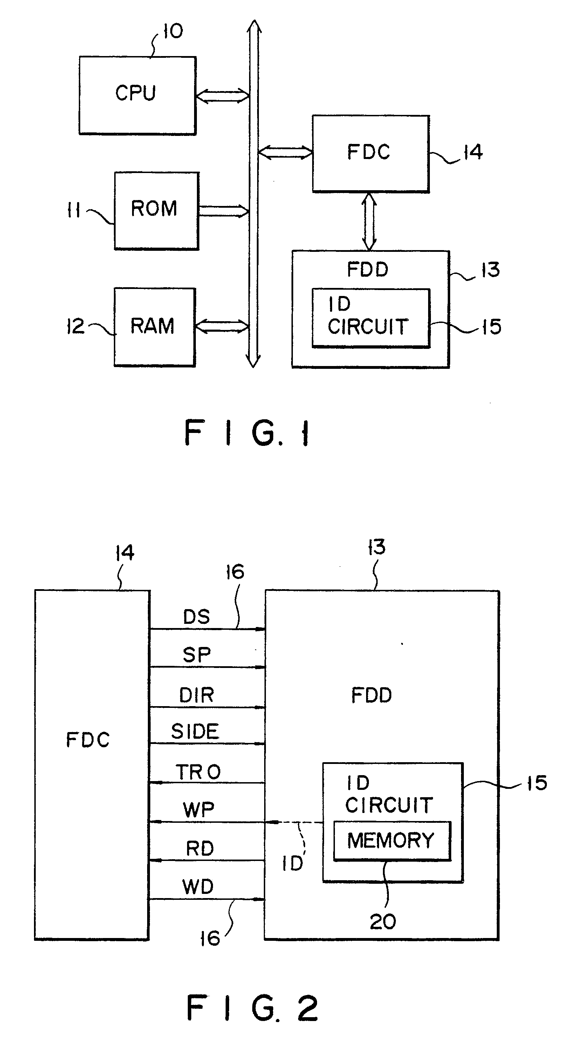

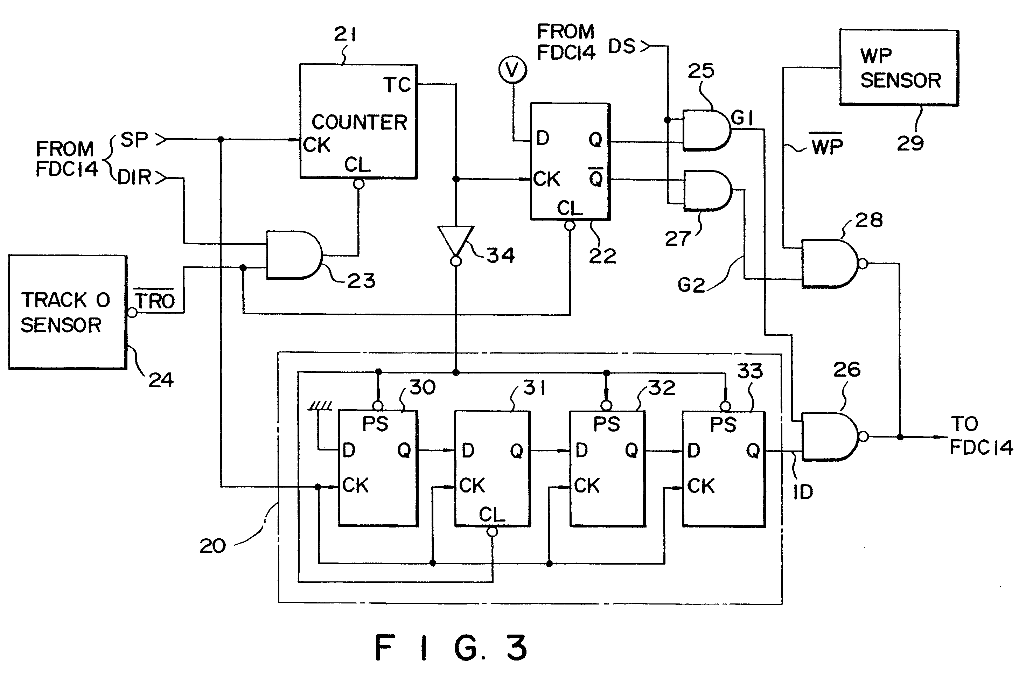

Fig. 1 is a block diagram showing a main part of a computer system according to the present invention. A main body of this system comprises a central processing unit (CPU) 10, a ROM (read only memory) 11, and a RAM (read/write memory) 12. The CPU 10 executes various types of data processing on the basis of programs stored in the ROM 11 and data stored in the RAM 12. One or a plurality of FDDs 13 can be connected as external storage devices to this system. The system includes an FDC 14 which constitutes an interface between the FDD 13 and the CPU 10. The FDC 14 executes drive control of the FDD 13 and exchanges various types of interface signals under the control of the CPU 10. The FDD 13 of the present invention includes an identifying circuit (ID circuit) 15 for outputting identification data (to be referred to as ID data hereinafter) for identifying a specification of an FDD.

As shown in Fig. 2, the FDD 13 and the FDC 14 are connected through a plurality of interface lines 16 and exchange various types of interfaces signals through the interface lines 16. Examples of the interface signal output from the FDC 14 are a drive select signal DS, a step pulse SP, a direction signal DIR, a head switch signal SIDE, and a write data signal WD. Examples of the interface signal output from the FDD 13 are a track 0 signal TR0, a write protected signal WP, and a read data signal RD. In the present invention, the ID circuit 15 arranged in the FDD 13 has a memory 20 for storing ID data. The ID circuit 15 transfers ID data output from the memory 20 to the FDC 14 through the interface signal line 16 for transferring the write protected signal WP.

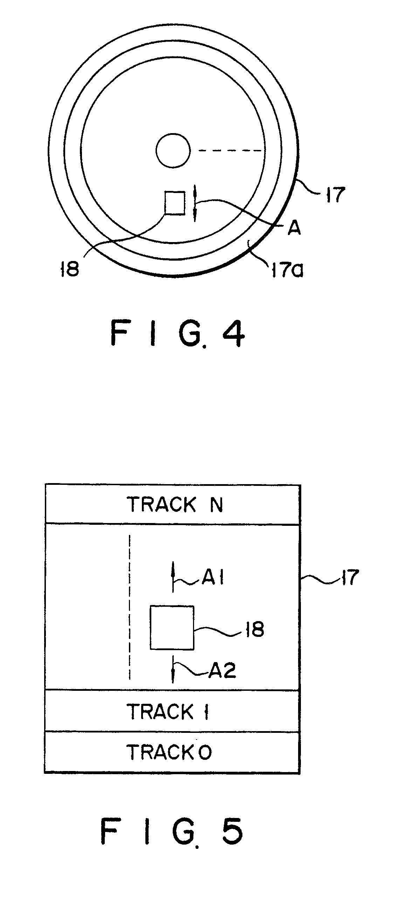

As shown in Fig. 4, the FDD 13 has a head 18 for performing a data read/write operation for a disk 17 as a recording medium. A plurality of concentrical tracks 17a are formed on both surfaces of the disk 17 by a formatting operation of the FDC 14. The outermost track of the disk 17 is normally a track 0. The head 18 is mounted on a carriage mechanism (not shown) and moved (to seek) in the radial direction (indicated by an arrow A) of the disk 17 by a driving force of the stepping motor of the carriage mechanism. A moving direction (inner or outer direction) of the head 18 upon seeking is designated by the signal DIR from the FDC 14. In this arrangement, the inner direction is designated when the signal DIR of logic level "H" is output, and the outer direction is designated when the signal DIR of logic level "L" is output. The head 18 moves to a designated target track in synchronism with the step pulse SP from the FDC 14. The FDC 14 outputs the step pulses 14 having a pulse number corresponding to the moving distance (track number) of the head 18. The head 18 moves by one track by one step pulse SP.

As shown in Fig. 3, the IC circuit 15 is a logic circuit including a counter 21, a flip-flop 22 constituting a latch circuit, and a memory 20 constituted by shift registers. The counter 21 counts the step pulses SP supplied to a clock terminal CK and outputs a signal TC of logic level "H" from a terminal TC when it counts up to a preset count value (e.g., 160). An output signal from an AND gate 23 is input to a clear terminal CL of the counter 21. The signal DIR from the FDC 14 and the track 0 signal TR0 from a track 0 sensor 24 are input to two input terminals of the AND gate 23.

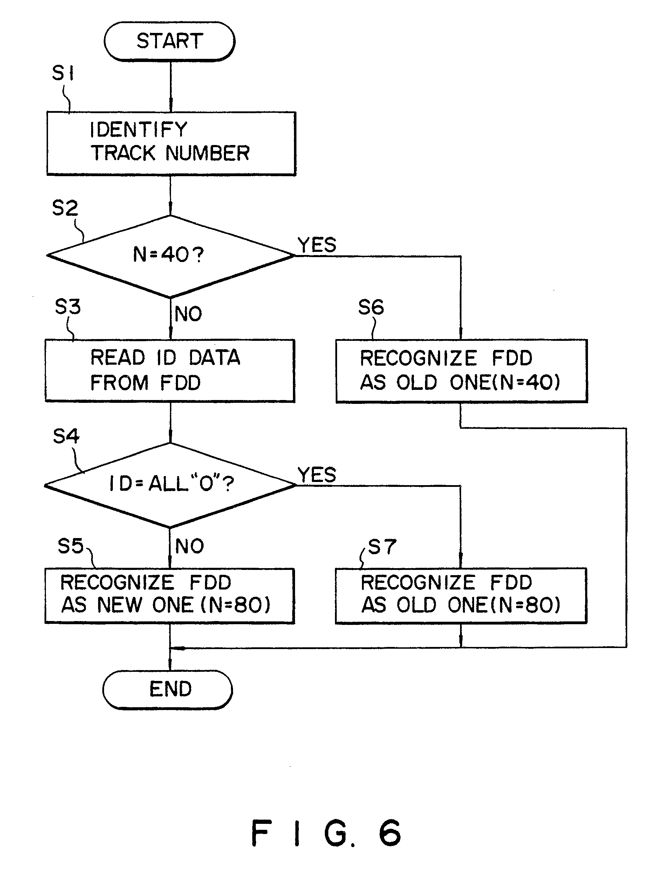

The track 0 sensor 24 is arranged in the FDD 13. As shown in Fig. 5, when the head 18 moves to the position of the outermost track 0 of the disk 17, the track 0 sensor 24 detects this and outputs the track 0 signal TR0 of logic level "L". The FDC 14 receives the track 0 signal TR0 as an interface signal, thereby detecting that the head 18 is located at the outermost track 0 as a reference position of seeking.

The flip-flop 22 is a latch circuit for latching an response state in synchronism with the signal TC output from the counter 21 to the clock terminal CK. The ID response state means that the FDD 13 is not in a normal state (read/write mode) but in an ID discrimination mode for outputting ID data to the CPU 10. When the ID response state is set, the flip-flop 22 outputs a signal of logic level "H" from its Q output terminal to one input terminal of an AND gate 25. The AND gate 25 receives the drive select signal DS from the FDC 14 at the other input terminal and outputs a signal G1 from its output terminal to one input terminal of a NAND gate 26. The flip-flop 22 also outputs a signal from its Q output terminal to one input terminal of an AND gate 27. The AND gate 27 receives the drive select signal DS at the other input terminal and outputs a signal G2 from its output terminal to one input terminal of a NAND gate 28.

The write protected signal WP from a write protect sensor (WP sensor) 29 is input to the other input terminal of the NAND gate 28. When the signal G2 of logic level "H" is input from the AND gate 27, the NAND gate 28 is set to be active to transfer the write protected signal WP of logic level "L" as an interface signal. The WP sensor 29 is arranged in the FDD 13 and outputs the signal WP of logic level "L" when it detects a write protect detecting slide arranged in a case for housing the disk 17. When the FDC 14 receives the signal WP as an interface signal, it inhibits a data write operation for the disk 17.

data output from the memory 20 is input to the other input terminal of the NAND gate 26. When the signal G1 of logic level "H" is input from the AND gate 25, the NAND gate 26 is set to be active to transfer the ID data stored in the memory 20 to the FDC 14 as an interface signal instead of the signal WP.

The memory 20 is a shift register having a plurality of (in this embodiment, four) preset type flip flops 30 to 33. Data "1" is preset in each of the flip-flops 30 to 33 each time an output signal from an inverter 34 for inverting the signal TC from the counter 21 is input to a preset terminal PS. Note that the data "1" is not preset in the flip-flop 31 in this arrangement. That is, a 4-bit shift register is arranged in the memory 20, and ID data of "1011" is preset in synchronism with the output signal from the inverter 34. This ID data indicates a specification of an advanced FDD which is identical in track number of, e.g., "80" but different in other specification items with respect to conventional FDDs.

An operation of the embodiment having the above arrangement will be described below.

First, as shown in step S1 of Fig. 6, the CPU 10 identifies a track number of a specification of the FDD 13 connected to the system. That is, the CPU 10 identifies whether the FDD 13 is of a track number "40" type (step S6) or a track number "80" type. Subsequently, in the present invention, the CPU 10 identifies whether the FDD 13 is of a conventional track number "80" type (step S7) or an advanced type (step S5) which is identical in track number of "80" but different in other specification items with respect to the conventional type.

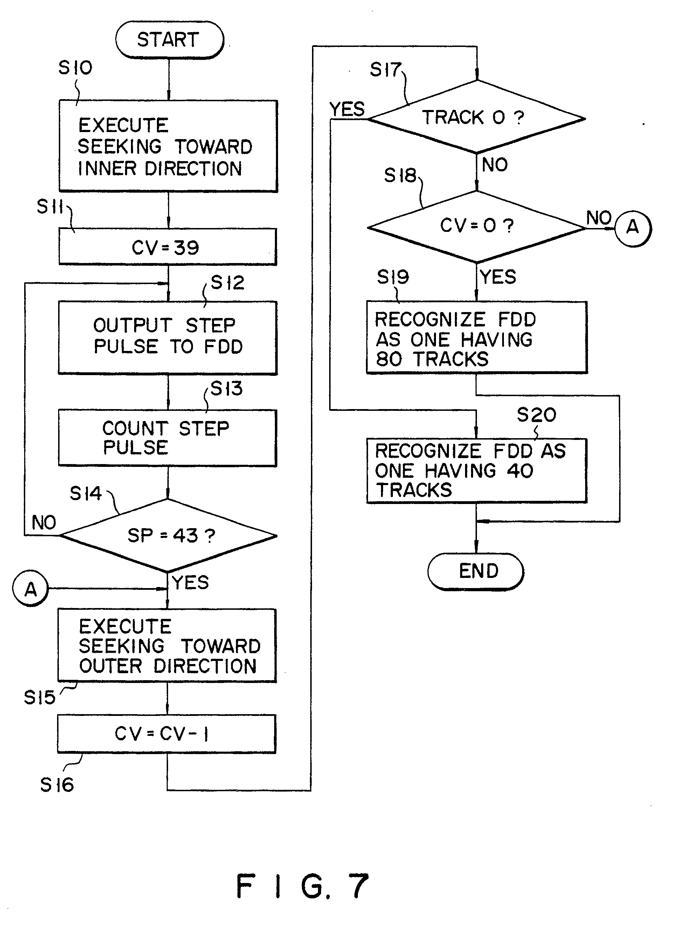

In the identification processing in step S1, the CPU 10 executes processing shown in Fig. 7. That is, as shown in step S10, the CPU 10 controls the FDC 14 to cause the head 18 of the FDD 13 to execute seeking toward the inner direction. In this case, the CPU 10 sets, e.g., "39" as a preset count value CV of a track counter (not shown) required for seeking control of the head 18 (step S11). The CPU 10 causes the FDC 14 to supply the step pulses SP having a pulse number of "43" to the FDD 13 (step S12). As shown in Fig. 5, the head 18 moves toward the inner direction (indicated by an arrow A1) of the disk 17 in synchronism with the step pulses SP from the FDC 14. The CPU 10 counts the step pulses SP (step S13) and switches the seeking direction of the head 18 to the outer direction (step S15) when it counts up 43 pulses (step S14). That is, if the FDD 13 connected to the system is of a track number "40" type, the head 18 moves to the innermost track (track N shown in Fig. 5) and executes reverse seeking from the innermost track toward the outer direction. If the FDD 13 is of a track number "80" type, the head 18 executes reverse seeking from substantially the middle position toward the outer direction.

The CPU 10 causes the FDC 14 to output the step pulses SP one by one to cause the head 18 to seek toward the outer direction. The CPU 10 decrements the count value of the track counter in synchronism with the step pulses SP (step S16).

Each time the head 18 moves by one track in synchronism with the step pulse SP, the track 0 sensor 24 detects whether the head 18 moves to the position of the outermost track 0 of the disk 17 (step S17). If the step pulses SP having a pulse number of "40" are output and the track 0 sensor 24 outputs the track 0 signal TR0, the CPU 10 identifies that the FDD 13 is of a track number "40" type (step S20). If the count value CV of the track counter is decremented to be "0" before the track zero signal TR0 is output from the track 0 sensor 24, the CPU 10 identifies that the FDD 13 is of a track number "80" type (steps S18 and S19).

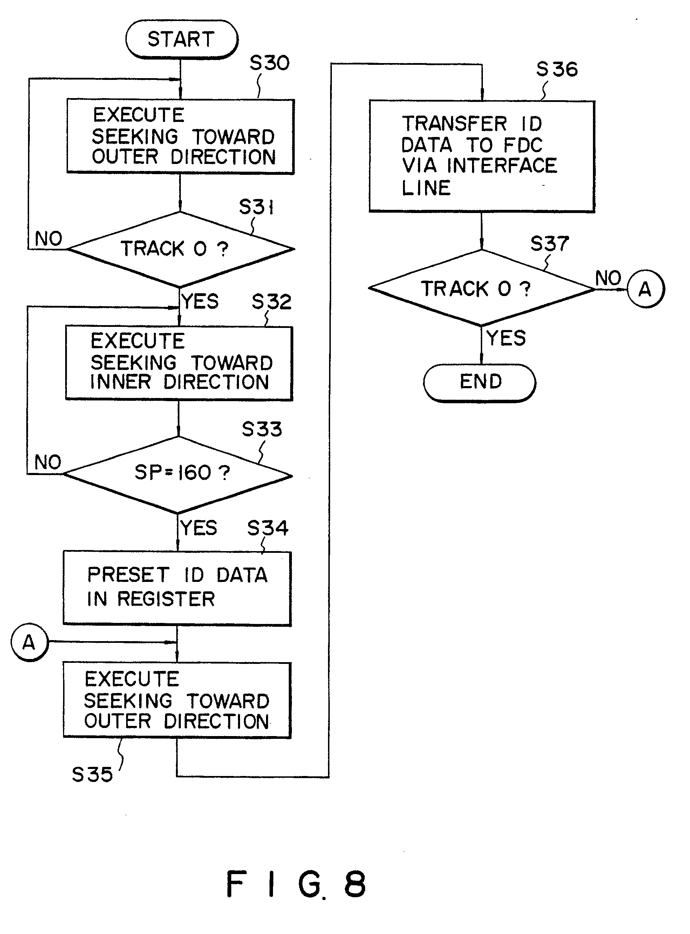

If the CPU 10 identifies in this identification processing that the FDD 13 is of a track number "80" type (NO in step S2), the CPU 10 advances to read processing of the ID data according to the present invention (step S3). In this ID data read processing, the CPU 10 executes processing as shown in Fig. 8. First, the CPU 10 controls the FDD 14 to cause the head 18 of the FDD 13 to execute seeking toward the outer direction (step S30). When the head 18 moves to the position of the outermost track 0 of the disk 17 and the track 0 sensor 24 outputs the track 0 signal TR0, the CPU 10 switches the seeking direction of the head 18 to the outer direction (steps S31 and S32).

In the processing in step S32, the FDC 14 outputs the signal DIR of logic level "H" for designating the inner direction. In addition, the track 0 signal TR0 from the track sensor 24 goes to logic level "H". Therefore, if the FDD 13 has the ID circuit 15 as shown in Fig. 3, the counter 21 is released from a clear state to start a count operation of the step pulses SP from the FDC 14. When the counter 21 counts up the preset count value (e.g., 160), it outputs the signal TC of logic level "H" from the terminal TC. In this case, the count value preset in the counter 21 is a value corresponding to a pulse number of the step pulses SP which is impossible in a normal read/write mode. That is, although the count value preset in the counter 21 need only be 81 or more since a maximum pulse number of the step pulses SP is "80" in an FDD of a track number "80" type, the value is set to be a double value "160" in consideration of a margin.

When the counter 21 counts up the step pulses SP to "160", it outputs the signal TC of logic level "H" from the terminal TC. When the signal TC is output, data "1" is preset in each of the flip-flops 30, 32, and 33 of the shift register 20 by the output signal from the inverter 34 for inverting the signal TC (step S34). The flip-flop 22 latches the ID response state indicating a state of the ID identification mode in synchronism with the signal TC from the counter 21. When the ID response state is set, the AND gate 25 outputs the signal G1 of logic level "H" to set the NAND gate 26 to be active to transfer the ID data from the shift register 20 to the FDC 14 through an interface line of the signal WP. In this case, the NAND gate 28 is in an inactive state and maintains a transfer inhibit state even if the write protected signal WP of logic level "L" is output from the WP sensor 29.

The CPU 10 switches the seeking direction of the head 18 from the inner to outer direction (step S35). Therefore, the FDC 14 outputs the signal DIR of logic level "L" for designating the outer direction. A clear signal of logic level "L" is output from the AND gate 23 in accordance with the signal DIR, thereby setting the counter 21 in the clear state. Meanwhile, the step pulse SP required for executing seeking toward the outer direction is output from the FDC 14 to the FDD 13. This step pulse SP is supplied to the clock terminals CK of the flip-flops 30 to 33 of the shift register 20. Therefore, the preset ID data (in this case, 4-bit data of "1011") is output from the shift register 20 to the NAND gate 26 in units of bits. In this manner, the ID data from the shift register 20 is transferred to the FDC 14 through the interface line of the signal WP (step S36).

The FDC 14 transfers the transferred ID data to the CPU 10. As shown in Fig. 6, the CPU 10 identifies on the basis of the ID data that the FDD 13 is an advanced type which is identical in the track number "80" but different in other specification items with respect to a conventional type (step S5). In the conventional type, the FDD 13 has no ID circuit 15. As a result, the ID data becomes all "0"s. Therefore, the CPU 10 identifies that the FDD 13 of a conventional type having the track number "80" (step S7).

The head 18 moves to the position of the outermost track 0 of the disk 17, and the track 0 sensor 24 outputs the track 0 signal TR0 (YES in step S34). When the track 0 signal TR0 of logic level "L" is output, the flip-flop 22 is cleared. Therefore, the NAND gate 26 is set in an inactive state to maintain the transfer inhibit state of the ID data from the shift register 20. Meanwhile, the NAND gate 28 is set to be active to transfer the write protected signal WP of logic level "L" from the WP sensor 29 to the FDC 14 through the interface line. That is, the identification mode set by the CPU 10 is released, and the normal read/write mode of the FDD 13 is set.

As has been described above, according to the present invention, an FDD which is different in track number of specification items from other FDDs can be identified, and an FDD which is identical in track number but different in other specification items with respect to other FDDs can be identified. In this case, the other specification items are preset in the memory 20 of the IC circuit 15. The CPU 10 uses the count value of the step pulses SP to maintain an identification mode different from a normal read/write mode. In this identification mode, the CPU 10 reads out the ID data preset in the memory 20 and executes FDD identification processing on the basis of this ID data.

Note that ID data to be preset in the memory 20 has four bits in the above embodiment, but the number of bits is not limited to this one. That is, the ID data to be preset is set in accordance with specification contents of an FDD beforehand. The CPU 10 has a table in which the ID data and the specification contents of an FDD correspond to each other and identifies the specification of an FDD connected to a system by using this table.

## Claims

1. A computer system with a function of discriminating a storage device, comprising:
interface means (14), constituting an interface between a central processing unit (10) of said system and said storage device (13) and connected to said storage device (13) through a plurality of interface signal lines (16), for exchanging various types of signals with said storage device (13);
characterized by further comprising:
identification circuit means (15) provided in said storage device (13) and having register means (20) for storing identification data set in accordance with a specification of said storage device (B), being transferred the identification data stored in said register means to said interface means through a predetermined signal line of said plurality of interface signal lines when the system is set in an identification mode.

2. A system according to claim 1, characterized in that said storage device (13) is constituted by a floppy disk drive, and said interface means (14) is a floppy disk controller.

3. A system according to claim 1, characterized in that said identification circuit means (15) transfers the identification data to said interface means (14) by using a write protected signal line of said plurality of interface signal lines.

4. A system according to claim 1, characterized in that said identification circuit means (15) reads out the identification data from said register means (20) in the identification mode in synchronism with a predetermined interface signal (SP) transferred from said inter face means (14).

5. A computer system with a function of discriminating a storage device comprising:
interface means (14), constituting an interface between a central processing unit (10) of said system and said storage device (13) and connected to said storage device (13) through a plurality of interface signal lines (16), for exchanging various types of interface signals with said storage device (13);

characterized by further comprising:

setting means (22), provided in said storage device (13), for setting identification mode information in synchronism with the first interface signal transferred from said interface means (14);

register means (20), provided in said storage device (13), for storing identification data set in accordance with a specification of said storage device (13); and

signal transfer means (26) for reading out the identification data from said register means (20) in correspondence with the identification mode information set by said setting means (22) in synchronism with the second interface signal transferred from said interface means (14), and transferring the readout identification data to said interface means (14) by using a predetermined signal line of the third interface signal lines;

6. A system according to claim 5, characterized in that said storage device (13) is constituted by a floppy disk device, and said interface means (14) is a floppy disk controller.

7. A system according to claim 5, characterized in that said predetermined signal line of the third interface signal is a write protected signal line of said plurality of interface signal lines.

8. A system according to claim 5, characterized in that said register means (20) is constituted by a shift register (30 to 33) and outputs the identification data in synchronism with the second interface signal.

9. A system according to claim 5, characterized by further comprising:

counter means (21) for counting step pulses transferred from said interface means (14) and outputting a significant signal when said counter means (21) counts up to a count value corresponding to a pulse number of the step pulses not generated in a normal read/write mode,

wherein said setting means (22) sets the identification mode information in synchronism with the significant signal from said counter means (21).

10. A system according to claim 5, further comprising:

counter means (21) for counting step pulses (SP) transferred from said interface means and outputting a significant signal when said counter means (21) counts up to a count value corresponding to a pulse number of the step pulses not generated in a normal read/write mode,

wherein the identification data is preset in said register means (20) in synchronism with the significant signal from said counter means (21).

11. A system according to claim 10, characterized in that said register means (20) outputs the identification data to said signal transfer means (26) in synchronism with a step pulse transferred from said interface means (14).

12. A system according to claim 10, characterized in that said counter means (21) counts step pulses (SP) transferred from said interface means (14) when a head (18) of said floppy disk drive (13) executes seeking toward a first direction as one of inner and outer directions in the identification mode,

characterized by further comprising:

track position detecting means (24) for detecting a predetermined position of said head (18) executing seeking toward a second direction when the identification mode is released, identification mode information set in said setting means (22) being cleared in synchronism with a detection signal from said track position detecting means (24).

F I G. 1

F I G. 2

F I G. 3

F I G. 4

F I G. 5

START

S1 IDENTIFY
TRACK NUMBER

S2 N=40 ?

YES

NO

S3 READ ID DATA
FROM FDD

S6 RECOGNIZE FDD
AS OLD ONE(N=40)

S4 ID=ALL "0" ?

YES

NO

S5 RECOGNIZE FDD
AS NEW ONE (N=80)

S7 RECOGNIZE FDD
AS OLD ONE(N=80)

END

F I G. 6

```
                    ┌─────────┐
                    │  START  │
                    └─────────┘
                         │
S10    ┌─────────────────────────┐
       │   EXECUTE                │
       │   SEEKING TOWARD         │
       │   INNER DIRECTION        │
       └─────────────────────────┘
                         │
S11    ┌─────────────────────────┐
       │        CV = 39           │
       └─────────────────────────┘
                         │
S12    ┌─────────────────────────┐
       │   OUTPUT STEP            │
       │   PULSE TO FDD           │
       └─────────────────────────┘
                         │
S13    ┌─────────────────────────┐
       │   COUNT STEP             │
       │   PULSE                  │
       └─────────────────────────┘
                         │
S14          ◇ SP = 43 ?  ◇   NO
                         │ YES
  (A) ─────────────────────────
S15    ┌─────────────────────────┐
       │   EXECUTE                │
       │   SEEKING TOWARD         │
       │   OUTER DIRECTION        │
       └─────────────────────────┘
                         │
S16    ┌─────────────────────────┐
       │      CV = CV - 1         │
       └─────────────────────────┘

S17          ◇ TRACK 0 ?  ◇   YES
                         │ NO
S18          ◇ CV = 0 ?  ◇   NO (A)
                         │ YES
S19    ┌─────────────────────────┐
       │   RECOGNIZE FDD          │
       │   AS ONE HAVING          │
       │   80 TRACKS              │
       └─────────────────────────┘

S20    ┌─────────────────────────┐
       │   RECOGNIZE FDD AS       │
       │   ONE HAVING 40          │
       │   TRACKS                 │
       └─────────────────────────┘
                         │
                    ┌─────────┐
                    │   END   │
                    └─────────┘
```

# F I G. 7

START

EXECUTE
SEEKING TOWARD
OUTER DIRECTION     S30

TRACK 0 ?     S31
NO

YES     S32

EXECUTE
SEEKING TOWARD
INNER DIRECTION

SP=160 ?     S33
NO

YES     S34

PRESET ID DATA
IN REGISTER

A

EXECUTE
SEEKING TOWARD
OUTER DIRECTION

S35

TRANSFER ID
DATA TO FDC
VIA INTERFACE
LINE     S36

TRACK 0 ?     S37     NO     A

YES

END

F I G. 8

12